# EUROPEAN PATENT APPLICATION

(11) **EP 2 323 302 A1**
(43) Date of publication of application: **18.05.2011**
(21) Application number: 09175657.7
(22) Date of filing: 11.11.2009
(51) Int. Cl.: H04L 1/18

(54) **Improved HARQ**

(71) Applicant: TELEFONAKTIEBOLAGET LM ERICSSON (publ), 164 83 Stockholm (SE)
(72) Inventor: Stala, Michal, 227 31 Lund (SE); Svensson, Jim, 224 74 Lund (SE)
(74) Representative: Akerman, Marten Lennart

(57) **Abstract**

A method in a hybrid automatic repeat request, HARQ process is described that comprises reading a plurality of memory locations in a memory which contains systematic soft values, parity 1 soft values and parity 2 soft values originating in a transport block. The reading comprises an initial reading operation during which at least one parity soft value is read, performing rate matching, and providing the rate matched soft values to a turbo decoding process.

## Description

### Technical field

The present invention relates to rate matching during a hybrid automatic repeat request (HARQ) process in a user equipment (UE) in a communication system.

### Background

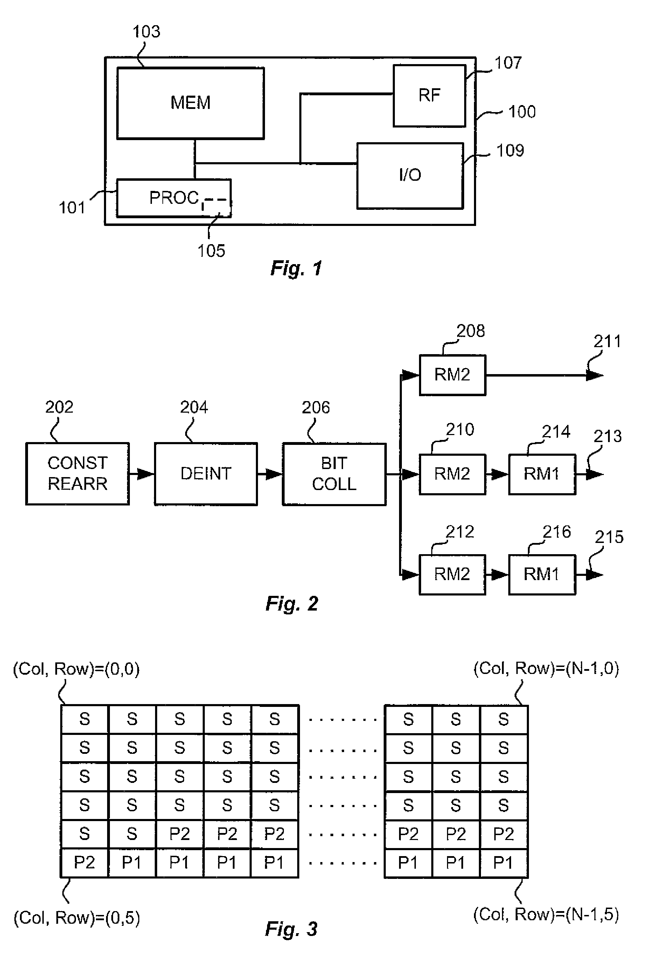

In a digital mobile communication system such as a WCDMA system, the HARQ functionality in a UE is usually divided into a number of sub blocks as schematically illustrated in figure 2. Incoming demodulated data symbols are subjected to constellation rearrangement 202, deinterleaver 204, bit collection 206, second rate matching stage 208, 210, 212 and first rate matching stage 214, 216. The constellation rearrangement 202 rearranges the soft values (SVs) in each symbol for the 16QAM and 64QAM modulation scheme constellations in different ways. The deinterleaver 204 interleaves the incoming data in 960, 1920 or 2880 SV chunks depending on modulation scheme constellation (QPSK, 16QAM, 64QAM respectively).

The bit collection 206 arranges the soft values from the deinterleaver into 2, 4 or 6 rows for QPSK, 16QAM and 64QAM respectively forming a data matrix. The number of columns in the matrix depends on the number of received soft values and the modulation scheme. For example if the number of soft values is 600 and the modulation scheme is 64QAM there will be 100 columns. Such a data matrix is illustrated in figure 3. The data is written on the transmitting side, i.e. the base station (BS), column by column in 2, 4 or 6 rows, depending on constellation. The received signal is demodulated to a number of soft values corresponding to systematic information bits, and a number of soft values corresponding to parity bits.

The bit collection 206 allocates space for the systematic soft values and the parity soft values in the data matrix. The example in figure 3 shows an example allocation for a 64QAM constellation (6 rows). It has allocated 4 full rows with systematic soft values and 2 systematic soft values in row 5. The rest of the space is reserved for parity 1 and parity 2 soft values.

The systematic soft values are written column by column into its allocated space in the matrix. The parity soft values are also written column by column to its allocated space starting with parity 2. Referring to figure 3 and using the notation {column number, row number} the systematic soft values are written in the data matrix in the following sequence: systematic soft values {0,0} to {0,4}, {1,0} to {1,4}, {2,0} to {2,3}, ..., {N-1,0} to {N-1, 3}. The parity soft values, P1 and P2, are written in the data matrix in the following sequence: {0,5} (P2), {1,5} (P1), {2,4} (P2) to {2,5} (P1), ..., {N-1,4} (P2) to {N-1,5} (P1).

When the data has been arranged in the bit collection process, the transmitting side, i.e. the BS, reads the data column by column and outputs the data in a stream of consecutive columns, as is known in the art. A detailed specification is found in section 4.5.4.4 of 3GPP TS 25.212, V.7.4.0 (2007-03), "Multiplexing and channel coding (FDD)", http://www.3gpp.org (in the following referred to as 3GPP [1]).

The receiving side, i.e. the UE, should be able to read the systematic, parity 1 and parity 2 soft values according to how the data was arranged at the BS. In a WCDMA (HSDPA) UE, the two rate matching stages are responsible for providing a turbo decoder with the correct amount of data. The turbo decoder expects triplets of soft value data. For each systematic soft value there must be one parity 1 soft value and one parity 2 soft value.

The rate matching algorithms in WCDMA have two modes: repetition and puncturing. In the repetition mode, repeated data has been sent to the UE. The rate matching units on the UE side has to decrease the amount of data that was sent from the BS, and combine the soft values corresponding from repeated bits into one soft value. This is done by adding up the soft values corresponding to repeated bits to one soft value. When puncturing is used, some systematic or some parity bits were removed, and has not been sent from the BS (there are for example less parity soft value pairs than there are systematic soft values) and the rate matching units have to "increase" (match) the amount of data that has been sent from the BS. This is done by inserting zeros valued soft values in positions corresponding to the unsent bits.

The rate matching is divided into two stages, rate matching stage one, RM1, and rate matching stage two, RM2, or first rate matching stage and second rate matching stage, respectively. The RM2 aligns the data so it fits to be sent on the communication channel. The RM1 aligns the data so it fits an incremental redundancy {IR} buffer. The IR buffer stores intermediate data so it can be used when a retransmission occurs, and it has a fixed size for each transmission/retransmission and the RM1 must arrange the data so it fits to that fixed memory space. Triplets of soft values (systematic, parity 1 and parity 2) are provided as illustrated in figure 2 via three arms 211, 213 and 215. Along arm 211 systematic bits will be processed. Along arm 213 parity 1 bits will be processed and along arm 215 parity 2 bits will be processed.

The general rate matching algorithm is described in section 4.2.7.5 of 3GPP [1]. A drawback with the algorithm in 3GPP [1] is that the rate matcher units in certain cases cannot start producing triplets (systematic, parity 1 and parity 2) of soft value data immediately. This is dependent on how the data is arranged in the bit collection stage and how it is received at the HARQ. One extreme case is when the maximum transport block size data in 64 QAM is received and when all data is systematic soft values except for a single parity 1 soft value and a single parity 2 soft value written to locations {N-2,5} and {N-1,5}, respectively, in the matrix. In this case the rate matcher units that are responsible for the parity 1 and the parity 2 bits have to wait until the very end of the memory read. This introduces a large latency in the HARQ functional block.

### Summary

In order to improve on prior art solutions there is provided, according to a first aspect, a method in a hybrid automatic repeat request, HARQ process, comprising reading a plurality of memory locations in a memory which contains systematic soft values, parity 1 soft values and parity 2 soft values originating in a transport block, the reading comprising an initial reading operation during which at least one parity soft value is read, performing rate matching, and providing the rate matched soft values to a turbo decoding process.

In other words, the drawbacks as discussed above are addressed by a modified rate matching process that does not have to wait until the very end of the memory read in order to obtain the parity 1 and the parity 2 soft values. This has an effect of reducing latency in the HARQ process.

The reading of a plurality of memory locations may comprise a first reading of soft values corresponding to a first set of output bits from a bit collection process, and a second reading of soft values corresponding to a second set of output bits from the bit collection process, wherein the first set of output bits are produced from the bit collection process after the second set of bits.

The soft values may be arranged in a bit collected data area such that at least the first value in the data area is a systematic soft value and that at least the last value in the data area is a parity soft value.

In other words, instead of running the rate matching algorithm forward as in the prior art, the algorithm is run backwards. This is advantageous in cases where the parity information is at the end of the bit collected data area, such as in a data matrix, because then the parity soft values are guaranteed to be read in the very beginning of the data processing. In fact, the second rate matching stage for parity 1 may begin immediately in the one extreme case where all data is systematic soft values except for a single parity 1 soft value and a single parity 2 soft value written to locations {N-2,5} and {N-1,5}, respectively, in a data matrix in the case of 64 QAM. That is, a systematic soft value is written in the position of the first row and first column, and a parity soft value is written in the position of the last row and last column. The second rate matching stage for the systematic soft values may begin when the second soft value has been read and the second rate matching stage for the parity bits may begin when the seventh soft value has been read.

Moreover, such a reverse reading of the soft values is advantageous when utilizing memory circuitry that require burst mode operations. Such memory circuitry have a high penalty on reading small memory blocks and the reverse reading enables the rate matching process to obtain the parity soft values without resorting to scattered reading of small blocks of data from the memory.

The reading of a plurality of memory locations may be performed only when the number of systematic soft values in relation to the size of the data matrix is at a triggering level.

In other words, such embodiments apply the reverse reading conditionally, depending on the content of the data matrix. This is advantageous because in some situations there are only a few systematic soft values in the data matrix, one extreme case being where only one systematic soft value and all other soft values in the data matrix are parity soft values. By introducing such a condition, the use of forward reading and reverse reading can be tuned such that an optimal use of processing resources can be obtained.

The triggering level for running the backwards algorithm may be when the number of systematic bits is equal to the total number of parity bits.

In a second aspect, there is provided a processing unit configured to perform a hybrid automatic repeat request, HARQ, process, comprising means for reading a plurality of memory locations in a memory which contains systematic soft values, parity 1 soft values and parity 2 soft values originating in a transport block, the reading comprising an initial reading operation during which at least one parity soft value is read, means for performing rate matching, and means for providing the rate matched soft values to a turbo decoding process.

The apparatus according to the second aspect may, according to a third aspect, be comprised in a mobile communication device, and a computer program according to a fourth aspect may comprise software instructions that, when executed in a computer, performs the method according to the first aspect. These further aspects provide corresponding effects and advantages as discussed above in connection with the first aspect.

### Brief description of the drawings

Embodiments will now be described with reference to the attached drawings, where:
figure 1 is a functional block diagram that schematically illustrates a communication arrangement,
figure 2 is a functional block diagram of a HARQ process,
figure 3 illustrates soft values arranged by a bit collection process, and figures 4, 5, and 6 are diagrams showing latency results from simulations.

### Detailed description of embodiments

Figure 1 is a functional block diagram that schematically illustrates a processing platform that forms all or part of a mobile communication arrangement 100, such as a UE configured to operate in a WCDMA mobile communication system. The arrangement 100 comprises a processor 101, a memory 103, radio frequency circuitry 107 and an I/O unit 109 that represents a collection of circuitry for controlling input/output units such as a display, keypad, microphone and a loud speaker. As the skilled person will realize, the arrangement 100 is made operable in a communication system by means of the hardware as well as software components stored in memory circuitry, such as the memory 103 and memory circuitry 105 located in close connection to the processing circuitry, here illustrated with the processor 101. For example, the HARQ functionality discussed above will typically reside in the processor 101 and the memory circuitry 105.

In order to explain the effects and advantages of the rate matching summarized above, it is appropriate to discuss how the second rate matching stage is performed in the prior art and, following that description, describe a modified algorithm for the second rate matching stage that provides the effects and advantages summarized above. The first rate matching stage needs to be adapted in the same way as the second rate matching stage. The difference is that the IR buffer is not used in the first rate matching stage. The two rate matching stages have two sets of input variables configuring the functionality. Therefore it is appropriate to describe the second rate matching stage as the first rate matching stage would become a subset of the second rate matching stage description.

The rate matching algorithm is described in section 4.2.7.5 of 3GPP [1] in a general manner for the transmitting side. The pseudo code below describes the algorithm for the second rate matching stage for the UE side:

```
   e = e_ini
   n = 0
   for m=0..p-1
     e = e - e_minus
     if repetition
       y(m) = 0;
       do while e <= 0
         y (m) = y(m) + x (n)
         if use_ir
           y(m) = y(m) + ir (n)
         end if
         n = n + 1
         e = e + e_plus
       end do
     else //puncturing
       if e > 0
         y(m) = x(n)
         if use_ir
           y(m) = y(m) + ir(n)
           end if
           n = n + 1
        else
          if use_ir
           y(m) = ir (n)
          else
           y(m) = 0
          end if
          e = e + e_plus
       end if
     end if
   end for
```

in which the following variables are used:
- e_ini: An initialization value for the variable e
- e: A variable that determines how many repeated values that should be stored in the output variable x in the case of repetition. In the case of puncturing it determines if the output value x is punctured, set to zero, or not.
- e_minus: A static value that influence the value of the variable e.
- e_plus: A static value that influence the value of the variable e.
- m: The index counter.
- p: Determines the end of the index counter.
- y: The output values.
- x: The input values.
- ir: The IR buffer data values.
- n: A counter that indexes input values and IR buffer.
- use_ir: A Boolean value that determines if data should be read from the IR buffer or not.

The parameters configuring the algorithm in first rate matching stage and second rate matching stage are specified by the algorithm description in section 4.5.4.3 of 3GPP [1].The following specification is valid for the second rate matching stage:
If n_data <= n_sys + n_p1 + n_p2 puncturing is performed this leads to the following definitions on nt_sys:
nt_sys = min{n_sys, n_data} if systematic bits are prioritized (s=1)
nt_sys = max{n_data - (n_p1 + n_p2), 0} if non systematic bits are prioritized (s=0)
If n_data > n_sys + n__p1 + n p2 repetition is performed this leads to the following definitions on nt_sys:
nt_sys = floor{n_sys * n_data / (n_sys + 2 * n_p1)}

The number of parity bits (nt_p1 and nt_p2) in a transmission is specified as follows:
nt_p1 = floor{(n_data - nt_sys) / 2}
nt_p2 = ceil{(n_data - nt_sys) / 2}
n_data is defined as:
n_data = n_ph * 960 * c
where n_ph is the number of channels used for that transmission and c is the constellation number (c = 1 for QPSK, c = 2 for 16QAM and c = 3 for 64QAM).

The n_sys, n_p1 and n_p2 specifies the number of systematic, parity 1 and parity 2 bits that are outputted by the second rate matcher. These values are calculated from known parameters handled by functionality in higher layers of the protocol. The s and the r (used in definition of e_ini) parameters are also given from higher layers.

The e_ini parameter is specified by the following formulas:
e_ini = { (p - floor{ r * e_plus / r_max} - 1) mod e_plus} + 1 in the case of puncturing.
e_ini = { (p - floor{ (s + 2 * r) * e_plus / (2 * r_max)} - 1) mod e_plus} + 1 in the case of repetition.
r_max = 2 for 16QAM and 64QAM and
r_max = 4 for QPSK.

The p, e_plus and e_minus are defined as described in the following table:

| | p | e_plus | e_minus |
|---|---|---|---|
| Systematic | n_sys | n_sys | \|n_sys - nt_sys\| |
| Parity 1 | n_p1 | 2 * n_p1 | 2 *\| n_p1 * nt_p1 \| |
| Parity 2 | n_p2 | n_p2 | \| n_ p1 - nt_p2 \| |

The algorithm above describes the traditional way of performing the second rate matching. The indexing is done from the beginning, 0, to the end, p - 1. This may cause latency problems as described in previous paragraphs.

To overcome these problems it is desired to run the algorithm backwards indexing from p - 1 to 0. This requires modifications to the presented algorithm. The initialization of the e, e_minus, and e_plus must be reevaluated. The indexes, n and m, should not begin with zero.

The e_minus and the e_plus parameters determine the puncturing or the repetition ratio. That should be kept the same therefore the e_minus and the e_plus parameters are initialized as in the prior art case. An analysis, see proof in appendix, on the initialization value for e(e_ini) shows that the same value for the prior art case can be used in backward iteration when using the algorithm described by the following pseudo code:

```
   e = e_ini
   n = nt_x-1
   for m=p-1..0
     if repetition
       y(m) = 0;
       do while e - e_plus + e_minus > 0
         y (m) = y(m) + x (n)
         if use_ir
           y(m) = y(m) + ir (n)
         end if
         n = n + 1
         e = e + e_plus
       end do
     else //puncturing
       if e - e_plus + e_minus <= 0
         y(m) = x(n)
         if use_ir
           y(m) = y(m) + ir(n)
           end if
           n = n + 1
        else
          if use_ir
           y(m) = ir (n)
          else
           y(m) = 0
          end if
          e = e + e_plus
       end if
     end if
   e = e + e_minus
   end for
```

All the parameters have the corresponding meaning of the regular case as described above. The nt_x variable represents nt_sys, nt_p1, and nt_p2 for the systematic, parity 1 and parity 2 values respectively.

The latency in the HARQ and in the decoders of communication systems are important to keep low to be able to meet the requirements set by the standard. It could be difficult to meet the requirements on the HARQ when using "burst" mode memories with high penalty on random access reads. Some extreme/special cases together with "burst" mode memories make it difficult to reach the desired latency specification when applying a straight forward approach. The process described above overcomes this problem in a uniform way without any special cases. The use of backward rate matching when necessary, enables the HARQ to operate efficiently with no penalty on latency. The total amount of internal buffers will be decreased and only a small increase in logic is needed for the implementation in hardware, resulting in area gains during chip implementation.

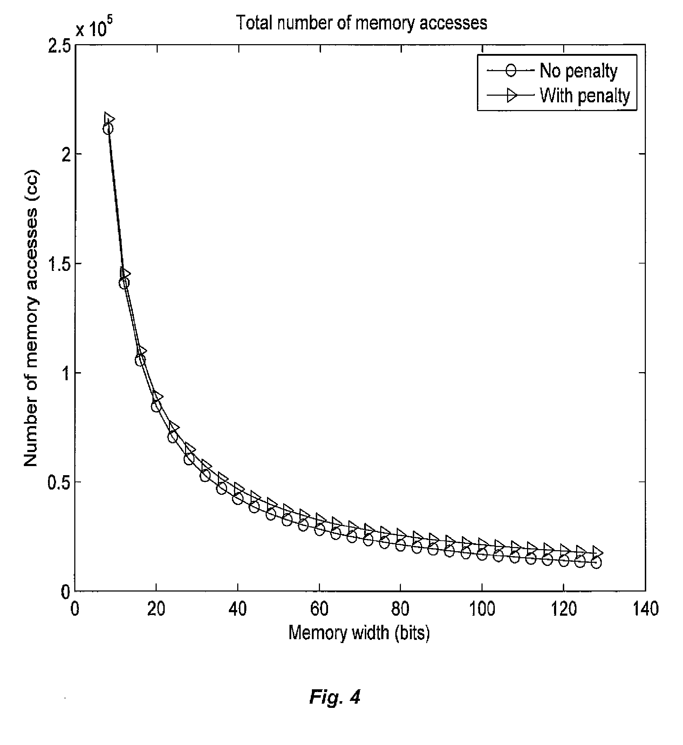

Turning now to figures 4, 5 and 6, results from simulations will now be presented. The simulations have been performed using MATLAB^{®} with a minimal simulator. The MATLAB^{®} program only simulates the necessary functionality and plots the results, as seen in Figure 4, Figure 5 and Figure 6.

First, assuming there is no penalty on random read/writes in memory. The only penalty is the fact that the memory width is not exactly the width of the incoming data (soft values). Each read in memory will waste 12 bits if for example the soft values are 4 bits wide and the memory has a 16 bit interface. The parity bits are read when necessary. The total number of memory accesses for the HARQ in the worst case is the input reads, the IR buffer reads, the IR buffer writes and the output writes (the suggested invention only reads each input memory once). This is in total: nearly 1.7Mbits that has to be accessed (assuming 4 bit soft values) in the worst case. When for example using a 16 bit wide memory for all memories this would lead to ~105000 memory accesses (or clock cycles if one access equals one clock cycle).

Figure 4 shows the number of memory accesses dependent on the memory width both for the optimum case, when each memory element is read only once, and the case when penalty is added because of the large memory width. It is assumed that parity bits corresponding to 9 interleaving blocks has to be randomly read (9*480 = 4320 soft values). It is also assumed that input and output as well as the IR buffer have the same memory width.

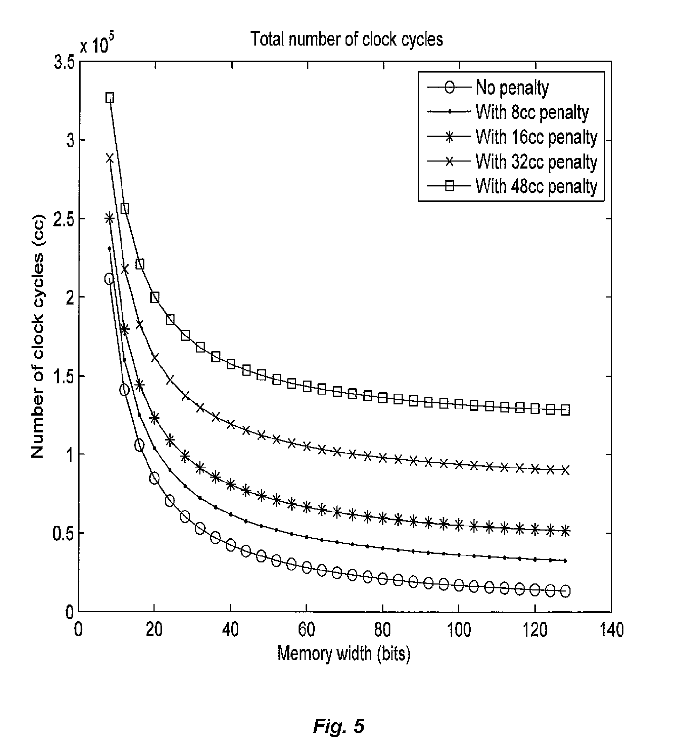

When introducing an extra penalty on random reads (typically seen in burst mode memory systems) the total penalty grows dramatically, see figure 5. The init delay (penalty) of one read sequence is 8 to 48 bits in the cases which the figure illustrates.

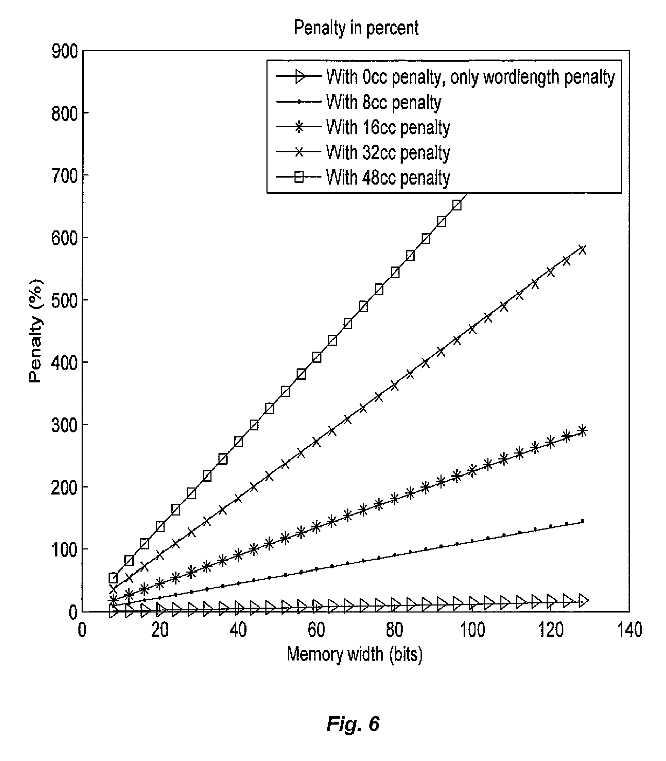

Figure 6 illustrates the penalty in percent. Even with a small penalty of 8 clock cycles (cc) per memory access and a memory width of 32 bits the total penalty will be ∼35%. That is, 35% more latency in time when assuming that all the HARQ memories are located in the same physical memory. The penalty on power consumption is proportional to the increase in the memory reads.

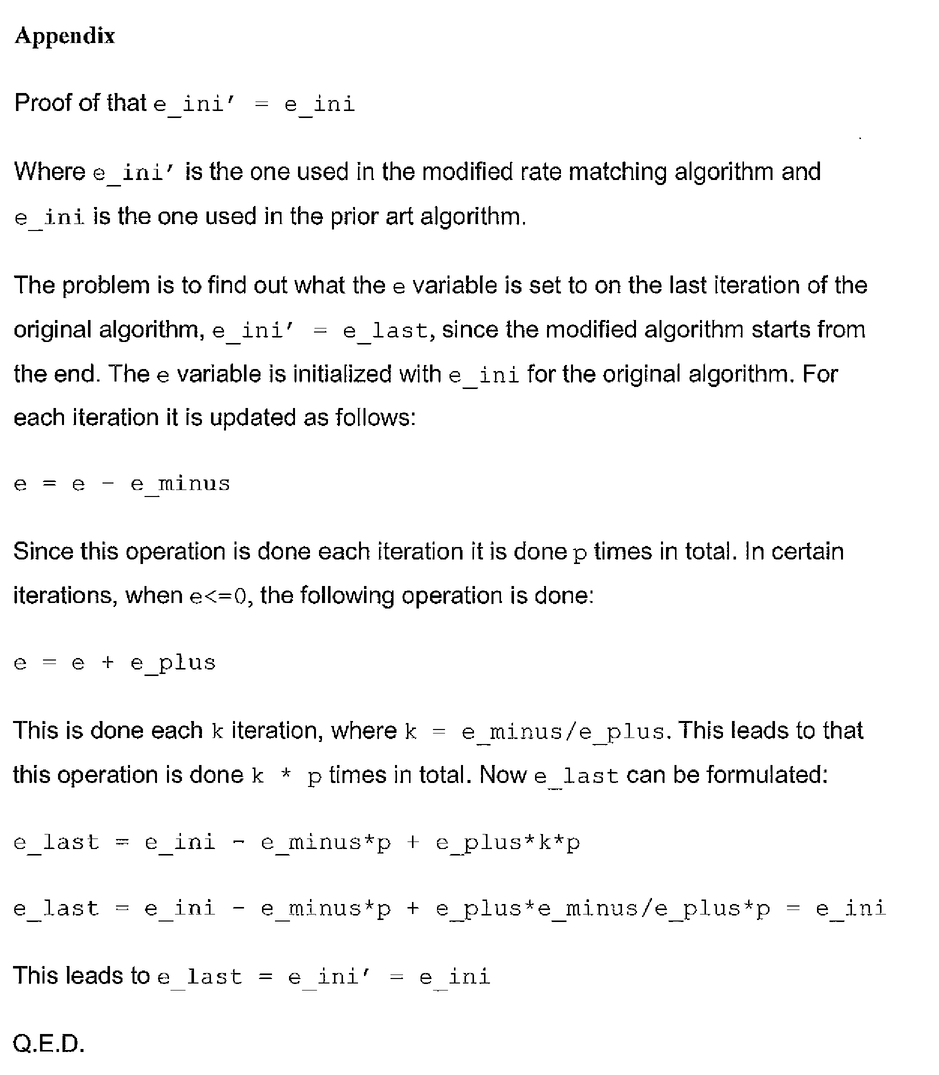

## Claims

1. A method in a hybrid automatic repeat request, HARQ process, comprising:
- reading a plurality of memory locations in a memory which contains systematic soft values, parity 1 soft values and parity 2 soft values originating in a transport block, the reading comprising an initial reading operation during which at least one parity soft value is read,
- performing rate matching of the soft values, and
- providing the rate matched soft values to a turbo decoding process.

2. The method of claim 1, wherein:
- the reading of a plurality of memory locations comprises a first reading of soft values corresponding to a first set of output bits from a bit collection process, and a second reading of soft values corresponding to a second set of output bits from the bit collection process, wherein the first set of output bits are produced from the bit collection process after the second set of bits.

3. The method of claim 1 or 2, where the soft values are arranged in a bit collected data area such that at least the first value in the data area is a systematic soft value and that at least the last value in the data area is a parity soft value.

4. The method of claim 3, wherein:
- the reading of a plurality of memory locations is performed only when the number of systematic soft values in relation to the total number of soft values in the data area is at a triggering level.

5. The method of claim 4, wherein the triggering level is when the number of systematic soft values is equal to the total number of parity soft values.

6. A processing unit (101) configured to perform a method in a hybrid automatic repeat request, HARQ process, comprising means for:
- reading a plurality of memory locations in a memory (105) which contains systematic soft values, parity 1 soft values and parity 2 soft values originating in a transport block, the reading comprising an initial reading operation during which at least one parity soft value is read,
- performing rate matching of the soft values, and
- providing the rate matched soft values to a turbo decoding process.

7. A mobile communication device (100) comprising a processing unit according to claim 6.

8. A computer program comprising software instructions that, when executed in a processing unit, performs the method of any of claim 1 to 5.
